Europäisches Patentamt

European Patent Office

Office européen des brevets

(19)

(11) Publication number : **0 512 734 A1**

(12) **EUROPEAN PATENT APPLICATION**

(21) Application number : **92303828.5**

(22) Date of filing : **28.04.92**

(51) Int. Cl.$^5$ : **H01G 4/22,** H01B 3/20

(30) Priority : **02.05.91 GB 9109520**

(43) Date of publication of application :
**11.11.92 Bulletin 92/46**

(84) Designated Contracting States :
**DE FR IT**

(71) Applicant : **ABB CAPACITORS LTD.**
**Rossmore Road East**
**Ellesmere Port, South Wirral L65 3DD (GB)**

(72) Inventor : **Greenshields, James Roy Thomson**
**7, Guilden Grove, Guilden Sutton**
**Chester, CH3 7SP (GB)**
Inventor : **Smart, Malcolm John**
**Hillside, Huxley Lane**
**Huxley, Chester, CH3 9BG (GB)**

(74) Representative : **Thomson, Paul Anthony**
**Potts, Kerr & Co. 15, Hamilton Square**
**Birkenhead Merseyside L41 6BR (GB)**

(54) **Improvements in or relating to capacitors.**

(57)  The efficiency of a metallised film capacitor is improved, whereby swelling of the film is minimised and any deleterious effects on the metallised layer are limited, and the service life thereof is made economically acceptable, by utilisation as the impregnation oil of a mixture of a synthetic hydrocarbon impregnation oil and a vegetable oil. Suitable hydrocarbon oils are selected from poly xylene ethane, mono di-benzyl toluene, di-tolyl ether, mono iso-propyl biphenyl and dioctyl phthalate, and suitable vegetable oils are selected from sunflower seed oil, rapeseed oil, soybean oil, castor oil and maize or corn oil. Ranges of from 10 to 90%, preferably 40 to 60%, for the hydrocarbon oil and 90% to 10%, preferably 60 to 40%, for the vegetable oil are disclosed.

EP 0 512 734 A1

The present invention concerns improvements in or relating to capacitors. More particularly, the present invention relates to metallised film capacitors impregnated with an oil mixture.

A traditional method of manufacturing capacitors with a high capacitance per unit volume is to metallise a polymer film with aluminium or zinc and to tightly wind same, using two layers of film, into a cylinder. The layers are wound offset to each other to allow a connection to be made at each end. This design of capacitor has voltage limitations due to ionisation occurring in the air gap between the films and ageing of the metal layer. Ionisation will chemically erode the metal and polymer, suitably polypropylene, film causing loss of capacitance and eventually breakdown of the capacitor within an unacceptable period.

In order to attempt to overcome the disadvantages mentioned above, a method has been provided of manufacturing capacitors having a high capacitance per unit volume by replacing the air between the films with a liquid, such as an oil, using vacuum impregnation. However, traditionally, the normal impregnation oils available tend to produce a capacitor having poor performance, viz., a short service life, possibly caused by improper impregnation, erosion of the metal layer due to a chemical action of the oil and excessive swelling of the film due to oil absorption into the film. Such swelling may also cause a deterioration of the sprayed metal and connections applied to each end of the cylinder.

It is an object of the present invention to at least minimise the disadvantages referred to above in relation to currently used impregnation oils.

According to the present invention there is provided an impregnation oil for use in a metallised film capacitor, comprising a mixture of a synthetic hydrocarbon impregnation oil together with a vegetable oil.

It has surprisingly been discovered that by utilisation of a synthetic hydrocarbon impregnation oil and a vegetable oil that the important properties of the synthetic oil are retained while the effects of the vegetable oil are to minimise absorption, and hence swelling of the film and also limit any deleterious effects on the metallised layer. By utilising such oil mixture cominbation, a capacitor can be made which will have a service life which is economically acceptable.

Suitable synthetic hydrocarbon impregnation oils which may be utilised in the oil mixture of the present invention are selected from poly xylene ethane, mono dibenzyl toluene, di-tolyl ether, mono iso-propyl biphenyl and dioctyl phthalate.

Suitable vegetable oils which may be utilised in the oil miture of the present invention are selected from sunflower seed oil, rapeseed oil, soybean oil, castor oil and maize or corn oil.

In accordance with a preferred embodiment of the present invention, the oil mixture of the present invention comprises 10 to 90%, further preferably 40 to 60% of the synthetic hydrocarbon oil and 90 to 10%, further preferably 60 to 40% of the vegetable oil. In a particularly preferred embodiment, the oil mixture comprises mono di-benzyl toluene and soybean oil, in a mixture ratio of 40% to 60% di-benzyl toluene and 60% to 40% soybean oil.

A further advantage in accordance with the present invention, when utilising the oil mixture referred to above, is that in winding a capacitor to be impregnated with such oil mixture, it is possible to use low winding tensions and produce a capacitor which can be pushed flat from the usual cylindrical shape into a substantially oblong shape. By utilising capacitors of such modified shape, it is possible to make better use of the available space giving more capacitance per unit volume as well as a more economical design.

It can thus be seen that a capacitor utilising the oil mixture of the present invention has a satisfactory service life, can be formed of a modified shape and is also economically acceptable, bearing in mind that the vegetable oils are far less expensive than traditional impregnation oils.

The invention will be further illustrated with reference to the following examples.

Example 1

An oil mixture was prepared in the following proportions:
Mono di-benzyl toluene     50%
Soybean oil                50%

The individual oils were cleaned, dried, dehydrated and filtered, in accordance with normal impregnation techniques, prior to mixing.

The oil mixture was then utilised in the production of a metallised film capacitor, in accordance with known production techniques.

Example2

An oil mixture was prepared in the following proportions:
Mono di-benzyl toluene     50%

EP 0 512 734 A1

Rapeseed oil                 50%

The oils were treated as in Example 1 prior to mixing and the same techniques utilised in the production of a metallised film capacitor.

Example 3

An oil mixture was prepared in the following proportions:

Mono di-benzyl toluene      50%
Maize oil (corn oil)          50%

The oils were treated as in Example 1 prior to mixing and the same techniques utilised in the production of a metallised film capacitor.

Metallised film capacitors were also produced wherein alternative oil mixtures than supplied in the examples were utilised. For instance, oil mixtures were prepared as utilised in Examples 1, 2 and 3, but wherein the proportion of the vegetable oil was increased to 60% and the proportion of the hydrocarbon oil was reduced to 40%. Furthermore, oil mixtures were prepared as above, wherein the mono di-benzyl toluene was replaced by poly xylene ethane, di-tolyl ether, mono iso-propyl biphenyl and dioctyl phthalate. Additional oil mixtures were prepared containing sunflower seed oil and castor oil as the vegetable oil.

Accelerated like testing of metallised film capacitors produced in accordance with the present invention have shown the capacitors to have acceptable characteristics and to minimise the previously mentioned disadvantages.

**Claims**

1.  An impregnation oil for use in a metallised film capacitor, comprising a mixture of a synthetic hydrocarbon impregnation oil together with a vegetable oil.

2.  An impregnation oil as claimed in claim 1, characterised in that the synthetic hydrocarbon impregnation oil is selected from poly xylene ethane, mono di-benzyl toluene, di-tolyl ether, mono iso-propyl biphenyl and dioctyl phthalate.

3.  An impregnation oil as claimed in claim 1 or 2, characterised in that the vegetable oil is selected from sunf lower seed oil, rapeseed oil, soybean oil, castor oil and maize or corn oil.

4.  An impregnation oil as claimed in claim 1, 2 or 3, characterised in that the oil comprises 10 to 90%, preferably 40 to 60%, of the synthetic hydrocarbon impregnation oil and 90 to 10%, preferably 60 to 40% of the vegetable oil.

5.  An impregnation oil as claimed in claim 4, comprising di-benzyl toluene and soybean oil, in a mixture ration of 40 to 60%, preferably 50%, of dibenzyl toluene and 60 to 40%, preferably 50%, of soybean oil.

6.  A metallised film capacitor including an impregnation oil, as claimed in any preceding claim.

7.  A capacitor as claimed in claim 6, characterised in that the capacitor is of cylindrical shape or of a substantially oblong shape.

3

**European Patent Office**

# EUROPEAN SEARCH REPORT

Application Number

EP    92 30 3828

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WORLD PATENTS INDEX<br>Section Ch, Week 7438,<br>Derwent Publications Ltd., London, GB;<br>Class E, AN 74-66995V<br>& JP-A-49 038 200 (JAPAN GASOLINE CO & KUREHA CHEM IND CO) 9 April 1974<br>* abstract * | 1,3 | H01G4/22<br>H01B3/20 |
| X | WORLD PATENTS INDEX<br>Section Ch, Week 7642,<br>Derwent Publications Ltd., London, GB;<br>Class E, AN 76-78671X<br>& JP-B-51 033 278 (MARUKON ELECTR) 19 September 1976<br>* abstract * | 1,3,4 | |
| X | WORLD PATENTS INDEX LATEST<br>Section Ch, Week 8450,<br>Derwent Publications Ltd., London, GB;<br>Class A, AN 84-309824<br>& JP-A-59 194 307 (SHIZUKI DENKI SEISA) 5 November 1984<br>* title * | 1,6 | TECHNICAL FIELDS SEARCHED (Int. Cl.5 ) |
| X | PATENT ABSTRACTS OF JAPAN<br>vol. 015, no. 233 (E-1077)14 June 1991<br>& JP-A-3 070 112 ( TORAY IND INC ) 26 March 1991<br>* abstract * | 1,6,7 | H01G<br>H01B |
| X<br><br>A | PATENT ABSTRACTS OF JAPAN<br>vol. 014, no. 248 (E-0933)28 May 1990<br>& JP-A-2 069 912 ( SHIZUKI DENKI SEISAKUSHO KK )<br>8 March 1990<br>* abstract * | 1<br><br>2 | |
| X | FR-A-2 233 684 (GENERAL ELECTRIC COMPANY)<br><br>* page 15, line 32 - page 16, line 34 * | 1,3,4,6,7 | |

The present search report has been drawn up for all claims

| Place of search | Date of completion of the search | Examiner |
|---|---|---|
| THE HAGUE | 10 AUGUST 1992 | MES L.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 92 30 3828

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 136 772 (KUREHA KAGAKU KOGYO KK) <br> * page 5, line 10 - line 24 * <br> * page 14, line 5 * <br> --- | 1,4,6 | |
| A | US-A-4 679 119 (SHEDIGIAN) <br><br> * abstract * <br> --- | 1,2,4,6, 7 | |
| A | US-A-4 642 731 (SHEDIGIAN) <br><br> * claims; figures * <br> --- | 1,3,4,6, 7 | |
| A | CONFERENCE RECORD OF THE 1985 INTERNATIONAL CONFERENCE ON PROPERTIES AND APPLICATIONS OF DIELECTRIC MATERIALS, XIAN, 24TH-29TH JUNE 1985 <br> vol. 2, IEEE, NEW YORK, US <br> pages 543 - 548; <br> MILLER ET AL.: 'Evaluation of capacitor impregnants' <br> * table 1 * <br> ----- | 2 | TECHNICAL FIELDS SEARCHED (Int. Cl.5) |

The present search report has been drawn up for all claims

| Place of search | Date of completion of the search | Examiner |
|---|---|---|
| THE HAGUE | 10 AUGUST 1992 | MES L.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)